# DEMANDE DE BREVET EUROPEEN

(11) **EP 4 567 938 A1**
(43) Date de publication de la demande: **11.06.2025**
(21) Numéro de dépôt: 24217386.2
(22) Date de dépôt: 04.12.2024
(51) Int. Cl.: H01M 8/00, H01M 8/0273, H01M 8/0276, H01M 8/0282, H01M 8/0286, H01M 8/2432, H01M 8/248, H01M 8/12

(54) **RÉACTEUR D'ÉLECTROLYSE OU DE CO-ÉLECTROLYSE (SOEC) OU PILE À COMBUSTIBLE (SOFC) À EMPILEMENT DE CELLULES ÉLECTROCHIMIQUES INTÉGRANT DES ÉLÉMENTS DE RENFORT MÉCANIQUE À RIGIDITÉ VARIABLE AVEC LA TEMPÉRATURE**

(30) Priorité: 06.12.2023 FR 2313691
(71) Demandeur: Commissariat à l'Energie Atomique et aux Energies Alternatives, 75015 Paris (FR)
(72) Inventeur: DI IORIO, Stéphane, 38054 GRENOBLE CEDEX 09 (FR); LECOQ, Aurélien, 38054 GRENOBLE CEDEX 09 (FR); MAISSE, Amélie, 38054 GRENOBLE CEDEX 09 (FR); VULLIEZ, Karl, 38054 GRENOBLE CEDEX 09 (FR)
(74) Mandataire: Cabinet Nony

(57) **Abrégé**

Réacteur d'électrolyse ou de co-électrolyse (SOEC) ou pile à combustible (SOFC) à empilement de cellules électrochimiques intégrant des éléments de renfort mécanique à rigidité variable avec la température.

L'invention concerne un dispositif électrochimique formé par assemblage par empilement usuel alterné de cellules électrochimiques et d'interconnecteurs électriques et fluidiques dans lequel on vient mettre en place à chaque étage au moins un élément de renfort mécanique qui va reprendre les efforts de flexion qui sont susceptibles d'apparaître dans l'empilement lors l'étape de traitement thermomécanique initial.

## Description

### Domaine technique

La présente invention concerne le domaine de des piles à combustibles à oxydes solides (SOFC, acronyme anglais pour « Solid Oxide Fuel Cell »), celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyser Cell »), et celui de la co-électrolyse à haute température de l'eau et d'un autre gaz choisi parmi le dioxyde de carbone CO₂. le dioxyde d'azote NO₂.

L'invention a trait plus particulièrement à la réalisation d'un dispositif électrochimique constituant un réacteur d'électrolyse ou de co-électrolyse de l'eau à haute température (EHT) de type SOEC, ou d'une pile à combustible de type SOFC, à empilement de cellules électrochimiques élémentaires.

La présente invention vise en premier lieu à améliorer l'assemblage d'un tel dispositif et également son fonctionnement.

Bien que décrite en référence principalement à l'application d'électrolyse de l'eau à haute température, l'invention s'applique tout aussi bien à une co-électrolyse d'eau et d'un autre gaz choisi parmi le dioxyde de carbone CO₂, qu'à une pile à combustible SOFC.

L'invention s'applique à une pile à combustible SOFC utilisant comme combustible soit de l'hydrogène, soit un hydrocarbure, par exemple le méthane CH4, ou tout autre combustible comme NH3.

### Technique antérieure

Une pile à combustible SOFC ou un électrolyseur EHT est un dispositif électrochimique constitué d'un empilement de motifs élémentaires comportant chacun une cellule électrochimique à oxydes solides, constituée de trois couches superposées l'une sur l'autre anode/électrolyte/cathode, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène produits dans un électrolyseur EHT ; air et hydrogène injectés et eau produite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, typiquement entre 600 et 950°C, on injecte de la vapeur d'eau H2O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène O2- migrent à travers l'électrolyte et se recombinent en dioxygène à l'interface entre l'électrolyte et l'électrode à oxygène (anode).

Pour assurer le fonctionnement d'une pile à combustible SOFC, on injecte de l'air (oxygène) dans le compartiment cathodique et de l'hydrogène dans le compartiment anodique. L'hydrogène H2 va se transformer en ions H+ et libérer des électrons qui sont captés par l'anode. Les ions H+ arrivent sur la cathode où ils se combinent aux ions O2- constitués à partir de l'oxygène de l'air, pour former de l'eau. Le transfert des ions H+ et des électrons vers la cathode va produire un courant électrique continu à partir de l'hydrogène.

Pour augmenter les débits d'hydrogène et d'oxygène produits dans le cas de l'électrolyse EHT ou pour augmenter la puissance électrique fournie dans le cas de d'une pile à combustible SOFC, il est connu d'empiler plusieurs cellules électrochimiques élémentaires les unes sur les autres en les séparant par les interconnecteurs. L'ensemble est positionné entre deux plaques de connexion d'extrémité qui supportent les alimentations électriques et les alimentations/collecte en gaz d'un électrolyseur (réacteur d'électrolyse) ou d'une pile à combustible SOFC.

Par ailleurs, pour améliorer la qualité des contacts électriques établis entre les interconnecteurs et les électrodes, et donc les performances des dispositifs électrochimiques précités, des éléments de contact électrique sont intercalés individuellement et agencés sur les électrodes. Dans un dispositif électrochimique, une grille de nickel est classiquement utilisée pour le contact avec l'électrode à hydrogène (cathode en réacteur EHT, anode en pile SOFC), car elle donne des résultats satisfaisants à faible coût.

Lors de toute la préparation d'un dispositif électrochimique, il est nécessaire que chaque couche de l'empilement et chaque étage soit positionné très précisément et que cette position soit maintenue.

Avant le fonctionnement d'un dispositif électrochimique précité, il est nécessaire de faire subir à son empilement au moins une étape de traitement thermique dite de réduction, afin de mettre les cellules électrochimiques sous leur forme réduite, et non pas oxydées comme elles le sont initialement.

Cette étape de réduction peut être un cycle thermomécanique sous gaz un gaz réducteur pour l'électrode à hydrogène et air ou gaz neutre pour l'électrode à oxygène.

Une étape de traitement thermique particulière a été décrite dans le brevet EP2870650 B1.

Les empilements mis en oeuvre à ce jour, utilisent, en général à chacun de leurs étages, des joints qui doivent garantir l'étanchéité entre deux compartiments de circulation des gaz, adjacents distincts, i.e. un compartiment anodique et un compartiment cathodique. Des joints avantageux ont été décrits dans le brevet EP3078071B1. Ces joints ont la particularité de nécessiter un conditionnement thermique pendant lesquels ils s'écrasent.

Les éléments de contacts, tels que les couches décrites dans la demande de brevet EP2900846A1 ou les grilles de nickel, s'écrasent également lors du conditionnement thermique et lors du fonctionnement du dispositif électrochimique, ce qui garantit leur bonne mise en place. Les éléments qui servent d'éléments de contact dans la chambre hydrogène s'écrasent également. Autrement dit, pendant l'étape de conditionnement thermique, un empilement d'un dispositif électrochimique précité s'écrase, typiquement de plusieurs centimètres. A ce jour, l'écrasement se déroule correctement.

Cependant, dans certains empilements SOEC/SOFC, les inventeurs ont pu constater des déformations néfastes pendant l'étape de traitement thermique préalable au fonctionnement. Ces déformations viennent réduire les zones de contact entre cellules électrochimiques et éléments de contact électrique.

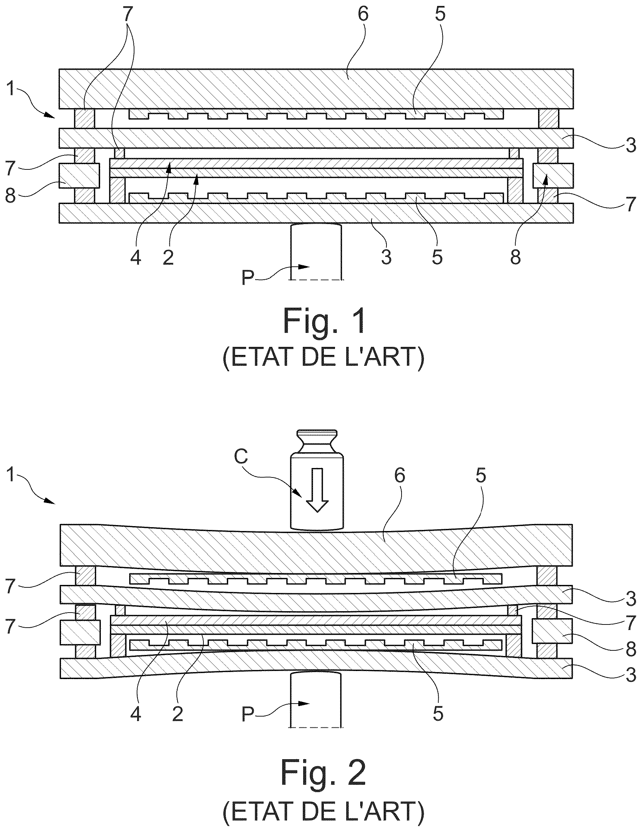

Cette situation indésirable est montrée en figures 1 et 2, avec un dispositif électrochimique 1 à empilement de cellules électrochimiques 2 à base d'oxydes solides de type SOEC/SOFC et d'interconnecteurs 3 électriques et fluidiques en matériau conducteur électronique et étanche aux gaz pour amener ou collecter le courant électrique aux cellules et pour amener, collecter et faire circuler des gaz sur chaque électrode de chaque cellule électrochimique. Chaque cellule électrochimique est constituée d'une première électrode formant une cathode, d'une deuxième électrode formant une anode et d'un électrolyte intercalé entre les deux électrodes.

Par souci de clarté, sur ces figures 1 et 2, une seule cellule électrochimique 2 est montrée telle qu'agencée entre deux interconnecteurs 3.

Un premier élément de contact électrique 4 est agencée en contact avec une électrode de la cellule 2 en regard d'un interconnecteur 3. Cet élément peut être sous la forme d'une grille de nickel, de préférence ajourée comme décrit dans la demande de brevet FR2213927 et qui peut intégrer du verre sous forme de cordon(s) pour guider les gaz, comme décrit dans le brevet EP3156721B1.

Un deuxième élément de contact électrique 5 est agencée en contact avec un autre interconnecteur 3 en regard de l'autre électrode de la cellule 2. Cet élément peut être une couche en céramique conductrice, notamment rainurée, Elle peut être une bande en manganite de Lanthane dopé strontium (LSM), qui a été préalablement découpée, et qui est collée ou thermopressée directement sur l'intreconnecteur 3. Le collage peut être réalisé sans résidu comme décrit dans la demande de brevet WO2022/234214. La bande en LSM peut également être solidarisée par thermopressage à une face de l'interconnecteur 3, comme décrit dans EP2900846B1.

Comme montré à l'extrémité de l'empilement, un élément de contact électrique 5 notamment identique à celui en contact avec un interconnecteur peut être fixé à la face intérieure d'une plaque dite terminale 6 de l'empilement 1.

Des joints d'étanchéité 7, de préférence en vitrocéramique, sont interposés autour de la cellule 2 et des passages de gaz, en étant en contact avec la cellule 2 ou l'un et l'autre des éléments de contact électrique 4, 5. Les joints 7 entre deux interconnecteurs adjacents 3 au sein de l'empilement peuvent être supportés par un cadre étanche 8 en matériau isolant électrique, de préférence en mica.

Dans cette configuration, initialement les éléments métalliques (plaques terminales 6, interconnecteurs 3) reposent sur les joints d'étanchéité 7, comme montré à la figure 1.

Le serrage de l'empilement 1 est effectué à froid entre un point d'appui P et une charge axiale C, réalisée à la verticale. Lors de la première montée en température, la résistance mécanique des éléments métalliques 6, 3 diminue alors que celle des joints d'étanchéité 7 ne changent pas avant, typiquement à 650°C voir 700 °C, lorsque ces derniers sont en vitrocéramique.

Mais, il peut arriver que le chargement de flexion appliqué aux éléments métalliques 3, 6 conduisent à leurs déformations irréversibles (figure 2), ce qui est dommageable pour les contacts électriques ultérieurs. En effet, comme schématisé les faces planes des éléments métalliques, qui devraient être idéalement en contact direct sur toutes leurs surfaces, ne le sont plus.

Il existe donc un besoin pour améliorer encore les dispositifs électrochimiques à empilement de cellules électrochimiques, formant un réacteur d'électrolyse de type SOEC ou une pile à combustible de type SOFC, notamment afin d'éviter les conséquences de déformations irréversibles, non souhaitées, d'éléments de contact électrique au sein de l'empilement, qui peuvent apparaître dans la phase transitoire de première montée en température lors du conditionnement thermique avant le premier cycle de fonctionnement.

### Exposé de l'invention

Pour ce faire, l'invention a tout d'abord pour objet un dispositif électrochimique, constituant un réacteur d'électrolyse ou de co-électrolyse SOEC ou une pile à combustible SOFC, destiné à fonctionner à haute température, comprenant :
- un empilement de cellules électrochimiques à base d'oxydes solides de type SOEC/SOFC et d'interconnecteurs électriques et fluidiques agencés individuellement de part et d'autre de chacune des cellules électrochimiques, chaque interconnecteur comprenant au moins un composant en matériau conducteur électronique et étanche aux gaz pour amener ou collecter le courant électrique aux cellules et pour amener, collecter et faire circuler des gaz sur chaque électrode de chaque cellule électrochimique ;
- deux plaques, dites plaques terminales, agencées aux extrémités de l'empilement ;
- une pluralité d'éléments de contact électrique, agencés chacun avec contact avec une face de l'une des plaques terminales ou avec une électrode des cellules électrochimiques ou avec une face d'un interconnecteur;
- une pluralité de joints d'étanchéité, agencés chacun autour de chacune des ouvertures traversantes pour assurer l'étanchéité autour de chaque entrée/sortie de gaz au sein de l'empilement ;
- une pluralité d'éléments de renfort mécanique, agencés chacun avec contact avec une face de l'une des plaques terminales ou avec une électrode des cellules électrochimiques ou avec une face d'un interconnecteur, les éléments de renfort mécanique étant en un matériau isolant électrique et présentant une rigidité variable en fonction de la température et sensiblement égale à celles des joints d'étanchéité de sorte que lors d'une première montée en température du dispositif, avant son fonctionnement, les éléments de renfort se ramollissent puis fondent simultanément avec les joints d'étanchéité en limitant les flexions des plaques terminales et des interconnecteurs.

De préférence, les éléments de renfort mécanique sont dans le même matériau constitutif que celui des joints d'étanchéité, de préférence une vitrocéramique.

Avantageusement, les éléments de renfort mécanique sont sous la forme de cordons, de préférence fermés sur eux-mêmes, et/ou de pastilles pleines.

Avantageusement encore, au moins une partie des éléments de renfort mécanique étant agencés au centre des faces des plaques terminales ou des électrode des cellules électrochimiques ou des faces des interconnecteurs. Lorsqu'elle est au centre des constituants de l'empilement, la position de la reprise d'effort par les éléments de renfort permet de diminuer le moment de flexion d'un facteur 4 puisque celui-ci dépend du carré de la longueur. Un élément de renfort mécanique selon l'invention peut être un appui ponctuel au centre de la pièce ou tout autre forme géométrique diminuant le moment de flexion.

Le matériau utilisé pour la cale assurant la reprise d'effort est avantageusement dans le même matériau que le joint d'étanchéité pour que le changement de rigidité se fasse de manière concomitante quand la température de ramollissement/fusion est atteinte.

De préférence, la surface d'un élément de renfort mécanique est comprise entre 0,1 et 10cm², de préférence encore de 0,5 cm².

Selon une première variante de réalisation avantageuse, les éléments de contact électrique comprennent au moins une grille électriquement conductrice, de préférence en or.

Une grille en or peut avoir une surface entre 0,5 et 5cm², de préférence de l'ordre de 2cm² avec un nombre de mailles de 100 à 3600 mailles /cm². On peut également envisager une grille de nickel. On veillera dans ce cas à réaliser une étanchéité autour de la grille pour éviter son oxydation. On peut également envisager une grille en cuivre. Une grille en céramique conductrice peut également être envisagée. Des grilles d'acier ferritique, de préférence en acier ferritique à environ 20% de chrome, de préférence en CROFER^{®} ou en K41 (acier 441) peuvent fonctionner s'il sont sous forme de grille. En effet, ces aciers à forte teneur en Cr résistent bien à la corrosion et sont de bons conducteurs électriques.

Des grilles en métal précieux, telles que le platine peuvent également être envisagées.

Le nombre de grilles supportées par face de la plaque intercalaire peut être compris entre 1 et 10, de préférence égal à 5. Avec une seule grille, la quantité de matière est limitée mais l'équilibre mécanique au sein d'un empilement peut ne pas être optimal. Avec un nombre de 10 grilles, l'équilibre mécanique est assuré mais la quantité de matière utilisée peut être importante.

De préférence, la surface d'une grille est comprise entre 0,5 et 5cm², de préférence de l'ordre de 2cm, pour une surface de tôle de l'ordre de 500 cm².

De préférence encore, la(les) grille(s) est(sont) soudée(s) directement à une face d'un interconnecteur et/ou d'une plaque terminale. La soudure peut être par points.

Selon une variante de réalisation avantageuse, un élément de renfort mécanique est sous la forme d'une pastille pleine agencée dans un ajour réalisé au centre de la grille.

Selon un mode de réalisation avantageux, on prévoit un nombre de cinq grilles en contact avec une électrode de cellule, réparties en carré ou en rectangle avec une d'entre elles au centre du carré ou rectangle.

Selon ce mode et une configuration avantageuse, un élément de renfort mécanique est sous la forme d'un cordon fermé sur lui-même en entourant la grille au centre du carré ou rectangle.

Selon une deuxième variante de réalisation avantageuse, les éléments de contact électrique comprennent au moins une couche d'un matériau en céramique conductrice.

Selon cette deuxième variante, le matériau en céramique conductrice est avantageusement choisi dans le groupe constitué par :
- La_{0,6}Sr_{0,4}Co_{0,8}Fe_{0,2}O₃ (LSCF) ;
- La_{0,8}Sr_{0,2}Cu_{0,9}Fe_{0,1}O_{2,5} (LSCuF) ;
- La_{0,7}Sr_{0,3}CoO₃ (LSC) ;
- Sm_{0,5}Sr_{0,5}CoO₃ (SSC) ;
- SmBa_{0,5}Sr_{0,5}Co₂O₅ (SBSC) ;
- GdSrCo₂O₅ (GSC) ;
- La_{0,65}Sr_{0,3}MnO₃ (LSM) ;
- LaBaCo₂O₅ (LBC) ;
- YBaCo₂O₅ (YBC) ;
- Nd_{1,8}Ce_{0,2}CuO₄ (NCC) ;
- La_{0,8}Sr_{0,2}Co_{0,3} Mn_{0,1} Fe_{0,6}O₃ (LSCMF) ;
- La_{0,98}Ni_{0,6}Fe_{0,4}O₃ (LNF) ;
- La_{1,2}Sr_{0,8}NiO₄ (LSN) ;
- La_{0,7}Sr_{0,3}FeO₃ (LSF) ;
- La₂Ni_{0,6}Cu_{0,4}O₄ (LNC).

Avantageusement encore, le matériau en céramique conductrice est choisi dans le groupe constitué par le LSM, le LSC, le LNF, et le LSCF.

De préférence, la couche de matériau en céramique conductrice est évidée sur au moins une partie de son épaisseur. L'évidement peut consister en des rainures, des trous ou tout autre forme. Le fait d'évider, en particulier de rainurer la couche de contact permet pour une même force d'écrasement, d'augmenter la contrainte et donc d'écraser plus la couche et par là mieux corriger les défauts de surface. Autrement dit, en rainurant une couche de contact, on améliore sa capacité d'écrasement. A contrario, une couche de contact pleine favorise le contact électrique du fait d'une plus grande surface de passage du courant.

Avantageusement, la couche de matériau en céramique conductrice est collée, de préférence par thermopressage ou au moyen d'une colle ou par thermopressage par la tôle chauffée au préalable par effet Joule par passage de courant ou inductif. On pourra se reporter aux méthodes de thermopressage avantageuses décrite dans le brevet EP2900846B1 ou de collage sans résidu décrite dans la demande de brevet WO2022/234214. Le thermopressage inductif consiste quant à lui à chauffer la ou les tôles d'interconnecteur ou de plaque terminale, par effet Joule puis appliquer directement à l'endroit souhaité la couche de matériau céramique.

Avantageusement encore, l'épaisseur de la couche de matériau en céramique conductrice sur chaque face de la tôle est comprise entre 100 µm et 5 mm.

On veille en outre à ce que la surface d'une couche en matériau céramique soit minimisée de sorte à augmenter les contraintes locales de serrage appliqué à l'empilement. En effet, la force de serrage appliquée est constante. Aussi, en réduisant la surface de la couche de contact la contrainte (F/S) sera augmentée. Par exemple, avec une même force et une couche en matériau céramique dont la surface est deux fois plus petite, la contrainte est deux fois plus élevée.

Ainsi, l'invention consiste essentiellement en un dispositif électrochimique formé par assemblage par empilement usuel alterné de cellules électrochimiques et d'interconnecteurs électriques et fluidiques dans lequel on vient mettre en place à chaque étage au moins un élément de renfort mécanique qui va reprendre les efforts de flexion qui sont susceptibles d'apparaître dans l'empilement lors l'étape de traitement thermomécanique initial.

Ce traitement sert à finaliser au moins la mise en place des éléments de contact électrique et des joints d'étanchéité au sein de l'empilement.

Et, dans les empilements selon l'état de l'art, lors de la phase de première montée en température du fait du ramollissement des joints d'étanchéité les flexions apparaissent.

Implanter des renforts mécanique réalisés avec des matériaux à rigidité variable en fonction de la température permet que lesdits renforts agissent en reprenant les efforts lors de la première montée en température.

Ces renforts, avantageusement dans le même matériau que les joints, plus particulièrement en vitrocéramique, vont rester rigides jusqu'à leur température de ramollissement/fusion identique aux joints.

Une fois cette température atteinte, tous les efforts mécaniques sont transmis uniformément aux éléments de contact électrique.

Au final, l'invention présente de nombreux avantages, parmi lesquels on peut citer :
- la suppression des déformations dans les empilements SOEC/SOFC, susceptibles de réduire les zones de contact entre cellules électrochimiques et éléments de contact électriques;
- en corollaire, l'obtention d'une plus grande maîtrise du niveau de courant électrique traversant les empilements SOEC/SOFC ;
- une simplicité et rapidité de mise en oeuvre des éléments de renfort mécanique qui sont implantés lors de l'étape de dépose des joints d'étanchéité ;
- un coût supplémentaire faible car il peut consister en un simple ajout de cordons et/ou de pastilles pleines en même matériau que les joints d'étanchéité.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique en coupe longitudinale d'une partie d'un dispositif électrochimique à empilement de cellules à oxydes solides selon l'état de l'art, une fois l'étape d'empilement des différents constituants réalisés.
[Fig 2] la figure 2 reprend la figure 1 et illustre les déformations en flexion qui peuvent se produire lors de la première montée en température pendant l'étape de traitement thermomécanique initiale appliquée au dispositif.
[Fig 3] la figure 3 est une vue schématique en coupe longitudinale au niveau d'une plaque terminale formant un couvercle d'un dispositif électrochimique à empilement de cellules à oxydes solides selon l'état de l'art.
[Fig 4A], [Fig 4B] les figures 4A et 4B sont des vues schématique en coupe longitudinale au niveau d'une plaque terminale formant un couvercle d'un dispositif électrochimique à empilement de cellules à oxydes solides selon l'invention, respectivement avant et après la mise en place concomitante des joints d'étanchéité et des éléments de renfort mécanique conformes à l'invention.
[Fig 5] la figure 5 est une reproduction photographique montrant une feuille de mica supportant des joints d'étanchéité et un élément de renfort mécanique, mise en place sur une plaque terminale d'un dispositif électrochimique selon l'invention.
[Fig 6] la figure 6 est une reproduction photographique d'un intercalaire selon l'invention supportant des élément de contact électrique et un élément de renfort mécanique.
[Fig 7] la figure 7 est une vue schématique en coupe longitudinale d'une partie d'un autre exemple de dispositif électrochimique à empilement de cellules à oxydes solides selon l'invention, une fois l'étape d'empilement des différents constituants réalisés.

### Description détaillée

Par souci de clarté, les mêmes éléments d'un dispositif électrochimique selon l'état de l'art et d'un dispositif électrochimique selon l'invention sont désignés par les mêmes références numériques.

Dans l'ensemble de la présente demande, les termes « inférieur », « supérieur », « dessus », « dessous », « intérieur », « extérieur », « « interne » « externe» sont à comprendre par référence à un dispositif électrochimique selon l'invention en configuration de fonctionnement, i.e. les modules étant empilés à la verticale.

On précise également que les électrolyseurs ou piles à combustible décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température.

Ainsi, tous les constituants (anode/électrolyte/cathode) d'une cellule d'électrolyse ou de pile sont des céramiques.

La haute température de fonctionnement d'un électrolyseur (réacteur d'électrolyse) ou d'une pile est typiquement comprise entre 600°C et 1000°C.

Typiquement, les caractéristiques d'une cellule d'électrolyse SOEC convenant à l'invention, du type cathode support (CSC), peuvent être celles indiquées comme suit dans le tableau 1 ci-dessous.

**[Tableau 1]**

| **Cellule d'électrolyse** | **Unité 1** | **Valeur** |
|---|---|---|
| **Cathode** | | |
| Matériau constitutif | | Ni-YSZ |
| Epaisseur | µm | 400 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10-13 |
| Tortuosité | | 4 |
| Densité de courant | A.m⁻² | 5300 |

| **Anode** | | |
|---|---|---|
| Matériau constitutif | | LSM , LSC |
| Epaisseur | µm | entre 10 et 50 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10-13 |
| Tortuosité | | 4 |
| Densité de courant | A.m⁻² | 2000 |

| **Electrolyte** | | |
|---|---|---|
| Matériau constitutif | | YSZ |
| Epaisseur | µm | <10 |
| Résistivité | Ω m | 0,42 |

Les figures 1 et 2 relatives à un dispositif électrochimique 1 selon l'état de l'art ont été décrites en préambule. Elles ne sont donc pas commentées ci-après.

Ayant constaté des déformations néfastes aux contacts électriques dans un empilement d'un dispositif électrochimique selon l'état de l'art, les inventeurs ont pensé à implanter dans ce type d'empilement des éléments de renfort mécanique dont le rôle est de reprendre les efforts mécanique pour réduire à minima les moments de flexion los de la première montée en température de l'empilement nécessaire pour réaliser la mise en place des joints d'étanchéité.

Afin de suivre au mieux la déformation de ces joints, les inventeurs ont pensé à réaliser ces éléments de renfort dans le même matériau constitutif, typiquement en une vitrocéramique d'étanchéité.

La vitrocéramique des éléments de renfort va rester ainsi rigide jusqu'à sa température de ramollissement/fusion puis tous les efforts mécanique de serrage vont être transmis aux éléments de de contact électrique.

Ainsi, les éléments de renfort, constitués du même matériau que les joints d'étanchéité agissent comme des cales de reprise d'effort. La reprise d'effort se fait donc tant que le moment de flexion est présent et elle est moindre dès que le moment de flexion réduit.

Un premier exemple de réalisation des éléments de renfort mécanique est montré en relation avec une plaque 9 formant le couvercle d'un dispositif électrochimique à empilement de cellules 2.

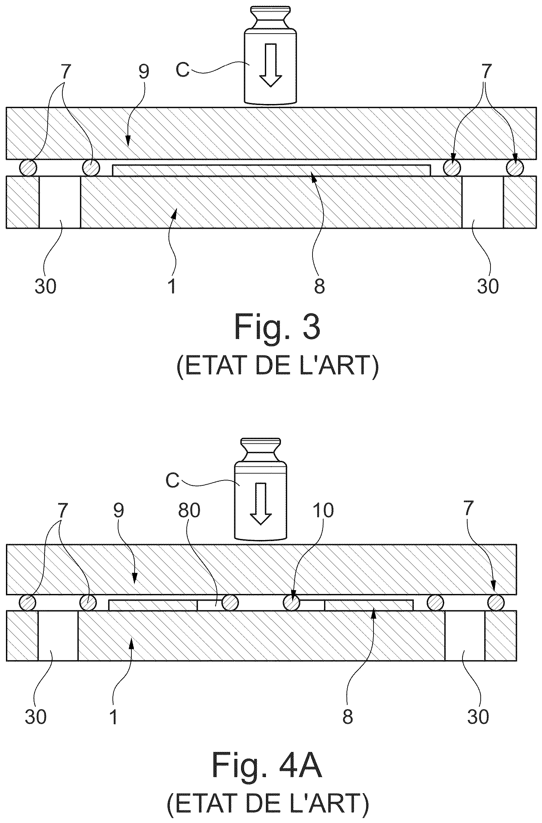

Comme montré à la figure 3, un couvercle 9 d'un dispositif 1 selon l'état de l'art, c'est-à-dire sans implantation d'élément de renfort pour la reprise d'effort, est en appui sur des joints vitrocéramiques 7 agencés à la périphérie qui peuvent par ailleurs être supportés par un support 8 généralement sous la forme d'une feuille de mica.

Soumis à une charge C de serrage, un tel couvercle 9est donc soumis à des contraintes de flexion qui peuvent conduire à sa déformation plastique. En effet, les joints d'étanchéité 7 restent rigides jusqu'à haute température, typiquement aux environs de 650 à 700°C, avant de se ramollir puis de fondre et se mettre en place. Les températures et les cycles nécessaires pour la mise en place des joints typiquement en verre ou vitrocéramique peuvent varier selon la nature de la composition. Typiquement, les températures peuvent être comprises entre 750 et 900 °C pendant une durée de 1 à 48hn selon un ou plusieurs cycles. La montée en température peut se faire pour un dispositif 1 jusqu'à 10°C/min.

Avec un élément de renfort mécanique 10, par exemple sous la forme d'une rondelle en vitrocéramique au centre du couvercle 6, de préférence dans un ajour 80 réalisé dans le support 8 en mica, comme illustré en figure 4A, alors les contraintes de flexion sont drastiquement réduites avant la fonte de la vitrocéramique.

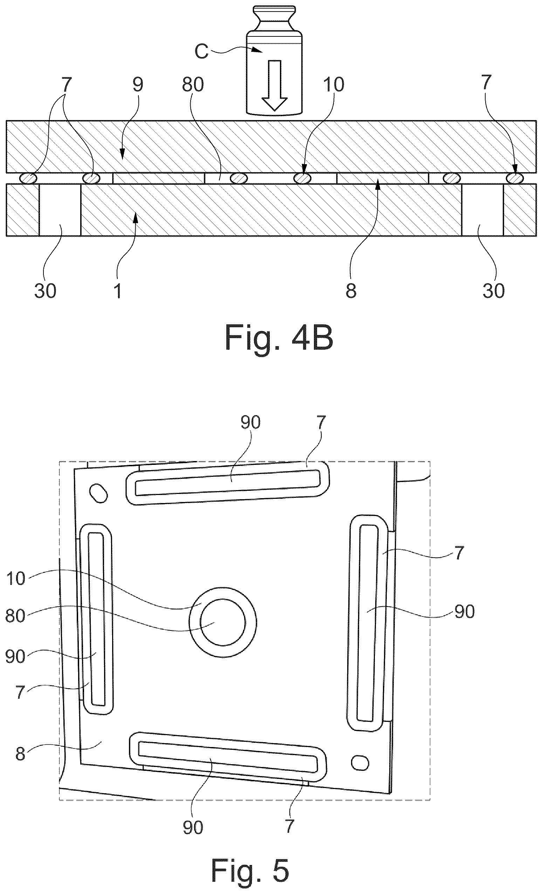

Comme montré à la figure 4B, du fait de la fonte de la vitrocéramique à la fois pour les joints 7 et pour rondelle 10 formant une cale de reprise d'effort, il n'y a plus de sollicitation de flexion.

La figure 5 montre un exemple concret de réalisation d'une plaque 9 formant un couvercle avec une feuille de mica 8 supportant à la fois les joints d'étanchéité 7 à la périphérie autour des ajours 90 qui sont regard des passages des gaz, et la rondelle de reprise d'effort 10 dans un ajour central 80 de la feuille 8.

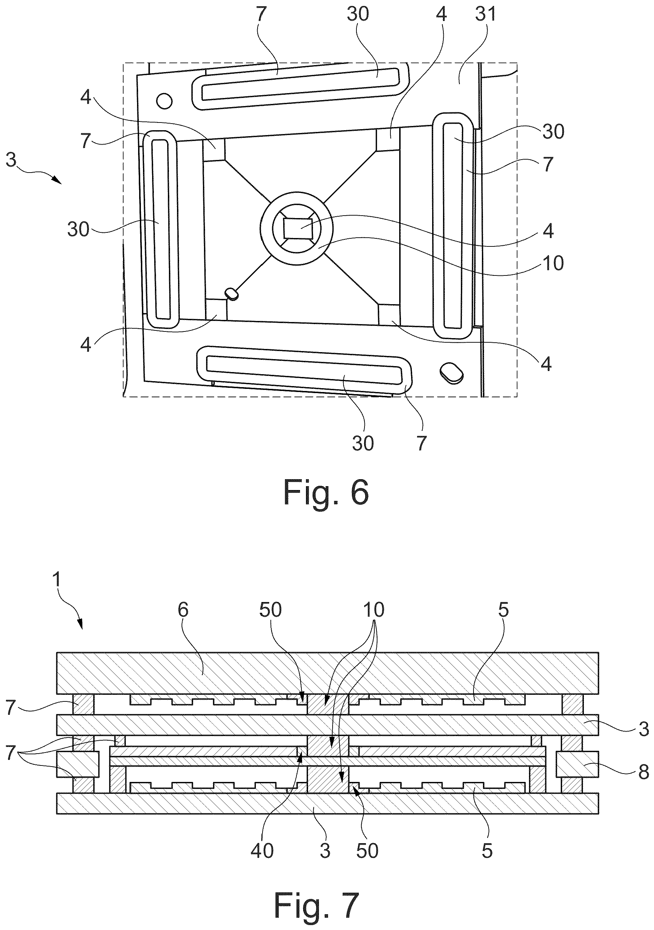

La figure 6 montre un autre exemple d'intégration d'élément de renfort 10 pour la reprise d'effort sur une face d'un interconnecteur 3.

La face de l'interconnecteur 3 supporte, en tant qu'éléments de contact électrique 4, un nombre de cinq grilles en or, réparties en carré avec une au centre du carré. Ces grilles 4 sont de préférence directement soudées à la face de la tôle extérieure de l'interconnecteur 3. Des joints d'étanchéité 7 ont été déposés sous la forme de cordons autour de chaque ouverture traversante 30 dédiée au passage des gaz dans un dispositif 1.

Un cordon en vitrocéramique 10, fermé sur lui-même en formant un anneau circulaire autour de la grille 4 du centre forme un élément de renfort mécanique qui va réduire les moments de flexion que pourrait subir l'interconnecteur 3 lors de la première montée en température.

La figure 7 montre encore un autre exemple de mise en oeuvre des éléments de renfort mécanique 10, en vitrocéramique.

Comme illustré, une pastille pleine 10 en vitrocéramique peut être agencée au centre de chacune des couches de contact électrique 5, notamment en LSM dans un ajour 50 réalisé à cette fin.

Des pastilles pleines 10 en vitrocéramique peuvent également mises en place dans un ajour 40 d'une grille de contact électrique 4, notamment en nickel.

On minimise ainsi l'effort de flexion en tout point d'un dispositif électrochimique 1 à empilement de cellules à oxydes solides.

Quelle que soit son implantation au sein d'un dispositif 1, on veille à ce que la surface d'un élément de renfort mécanique 10 ne soit pas trop grande pour éviter de réduire trop fortement les surfaces électrochimiques actives des cellules 2. Avantageusement, la surface d'un élément de renfort 10 est comprise entre 0,1 et 10cm², de préférence encore de 0,5 cm².

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Un élément de renfort mécanique 10 en matériau vitrocéramique selon l'invention peut être agencé de préférence au centre entre deux constituants de l'empilement formant un dispositif électrochimique.

La plaque 9 formant le couvercle peut être une être une plaque terminale, agencée à l'extrémité du dessus d'un empilement et dont la fonction première est de rigidifier, de pouvoir amener le courant sur une plaque épaisse, de pouvoir reprendre les effort lors du retour à froid. Dans ce cas la plaque terminale n'est pas débouchante car elle n'a pas la fonction de faire passer les gaz dans l'empilement.

Dans un empilement où la plaque terminale du dessus doit être débouchante, comme dans la demande de brevet EP3955353A1, alors le couvercle est formé par une plaque non débouchante, supplémentaire.

## Revendications

1. Dispositif électrochimique (1) constituant un réacteur d'électrolyse ou de co-électrolyse SOEC ou une pile à combustible SOFC, destiné à fonctionner à haute température, comprenant :
- un empilement de cellules électrochimiques (2) à base d'oxydes solides de type SOEC/SOFC et d'interconnecteurs électriques et fluidiques (3) agencés individuellement de part et d'autre de chacune des cellules électrochimiques, chaque interconnecteur comprenant au moins un composant en matériau conducteur électronique et étanche aux gaz pour amener ou collecter le courant électrique aux cellules et pour amener, collecter et faire circuler des gaz sur chaque électrode de chaque cellule électrochimique ;
- deux plaques (6), dites plaques terminales, agencées aux extrémités de l'empilement ;
- une pluralité d'éléments de contact électrique (4, 5), agencés chacun avec contact avec une face de l'une des plaques terminales ou avec une électrode des cellules électrochimiques ou avec une face d'un interconnecteur;
- une pluralité de joints d'étanchéité (7), agencés chacun autour de chacune des ouvertures traversantes pour assurer l'étanchéité autour de chaque entrée/sortie de gaz au sein de l'empilement ;
- une pluralité d'éléments de renfort mécanique (10), agencés chacun avec contact avec une face de l'une des plaques terminales ou avec une électrode des cellules électrochimiques ou avec une face d'un interconnecteur, les éléments de renfort mécanique étant en un matériau isolant électrique et présentant une rigidité variable en fonction de la température et sensiblement égale à celles des joints d'étanchéité de sorte que lors d'une première montée en température du dispositif, avant son fonctionnement, les éléments de renfort se ramollissent puis fondent simultanément avec les joints d'étanchéité en limitant les flexions des plaques terminales et des interconnecteurs.

2. Dispositif électrochimique selon la revendication 1, les éléments de renfort mécanique étant dans le même matériau constitutif que celui des joints d'étanchéité, de préférence une vitrocéramique.

3. Dispositif électrochimique selon la revendication 1 ou 2, au moins une partie des éléments de renfort mécanique étant agencés au centre des faces des plaques terminales ou des électrode des cellules électrochimiques ou des faces des interconnecteurs.

4. Dispositif électrochimique selon l'une des revendications précédentes, la surface d'un élément de renfort mécanique étant comprise entre 0,1 et 10cm², de préférence encore de 0,5 cm².

5. Dispositif électrochimique selon l'une des revendications précédentes, les éléments de renfort mécanique étant sous la forme de cordons, de préférence fermés sur eux-mêmes, et/ou de pastilles pleines.

6. Dispositif électrochimique selon l'une des revendications précédentes, les éléments de contact électrique comprenant au moins une grille électriquement conductrice, de préférence en or.

7. Dispositif électrochimique selon la revendication 6, le nombre de grilles en contact avec une électrode de cellule étant compris entre 1 et 10, de préférence égal à 5.

8. Dispositif électrochimique selon la revendication 6 ou 7, la surface d'une grille étant comprise entre 0,5 et 5cm², de préférence de l'ordre de 2cm².

9. Dispositif électrochimique selon l'une des revendications 6 à 8, la(les) grille(s) étant soudée(s) directement à une face d'un interconnecteur et/ou d'une plaque terminale.

10. Dispositif électrochimique selon l'une des revendications 6 à 9 en combinaison avec la revendication 5, un élément de renfort mécanique étant sous la forme d'une pastille pleine agencée dans un ajour réalisé au centre de la grille.

11. Dispositif électrochimique selon l'une des revendications 6 à 10, comprenant un nombre de cinq grilles en contact avec une électrode de cellule, réparties en carré ou en rectangle avec une d'entre elles au centre du carré ou rectangle.

12. Dispositif électrochimique selon la revendication 11 en combinaison avec la revendication 5, un élément de renfort mécanique étant sous la forme d'un cordon fermé sur lui-même en entourant la grille au centre du carré ou rectangle.

13. Dispositif électrochimique selon l'une des revendications 1 à 5, les éléments de contact électrique comprenant au moins une couche d'un matériau en céramique conductrice.

14. Dispositif électrochimique selon la revendication 13, le matériau en céramique conductrice étant choisi dans le groupe constitué par :
- La_{0,6}Sr_{0,4}Co_{0,8}Fe_{0,2}O₃ (LSCF) ;
- La_{0,8}Sr_{0,2}Cu_{0,9}Fe_{0,1}O_{2,5} (LSCuF) ;
- La_{0,7}Sr_{0,3}CoO₃ (LSC) ;
- Sm_{0,5}Sr_{0,5}Co0₃ (SSC) ;
- SmBa_{0,5}Sr_{0,5}Co₂O₅ (SBSC) ;
- GdSrCo₂O₅ (GSC) ;
- La_{0,65}Sr_{0,3}MnO₃ (LSM) ;
- LaBaCo₂O₅ (LBC) ;
- YBaCo₂O₅ (YBC) ;
- Nd_{1,8}Ce_{0,2}CuO₄ (NCC) ;
- La_{0,8}Sr_{0,2}Co_{0,3} Mn_{0,1} Fe_{0,6}O₃ (LSCMF) ;
- La_{0,98}Ni_{0,6}Fe_{0,4}O₃ (LNF) ;
- La_{1,2}Sr_{0,8}NiO₄ (LSN) ;
- La_{0,7}Sr_{0,3}FeO₃ (LSF) ;
- La₂Ni_{0,6}Cu_{0,4}O₄ (LNC).

15. Dispositif électrochimique selon l'une des revendications 13 ou 14, la couche de matériau en céramique conductrice étant évidée sur au moins une partie de son épaisseur.

16. Dispositif électrochimique selon l'une des revendications 13 à 15, la couche de matériau en céramique conductrice étant collée, de préférence par thermopressage ou au moyen d'une colle ou par thermopressage par la(les) tôle(s) d'interconnecteur chauffée(s) au préalable par effet Joule par passage de courant ou inductif.

17. Dispositif électrochimique selon l'une des revendications 13 à 16, l'épaisseur de la couche de matériau en céramique conductrice étant comprise entre 100 µm et 5 mm.

18. Dispositif électrochimique selon l'une des revendications 13 à 17 en combinaison avec la revendication 5, un élément de renfort mécanique étant sous la forme d'une pastille pleine agencée dans un ajour réalisé au centre de la couche céramique.
